# FASCICULE DE BREVET EUROPEEN

(11) **EP 3 969 541 B1**
(45) Date de publication et mention de la délivrance du brevet: **05.07.2023**
(21) Numéro de dépôt: 20725182.8
(22) Date de dépôt: 14.05.2020
(51) Int. Cl.: C10B 49/14, C10L 9/08, C10L 5/44

(54) **PROCÉDÉ D'OXYDATION EN BAIN DE SELS FONDUS**
OXIDATIONSVERFAHREN IN EINEM SALZSCHMELZEBAD
METHOD OF OXIDATION IN A MOLTEN SALT BATH

(30) Priorité: 17.05.2019 FR 1905204
(43) Date de publication de la demande: 23.03.2022
(73) Titulaire: Institut Polytechnique de Grenoble, 38000 Grenoble (FR); Centre national de la recherche scientifique, 75016 Paris (FR); Université Grenoble Alpes, 38400 Saint-Martin-d'Hères (FR); Université Savoie Mont Blanc, 73000 Chambéry (FR)
(72) Inventeur: TEDJAR, Farouk, 38000 GRENOBLE (FR); CHAINET, Eric, 38190 FROGES (FR); FOULETIER, Jacques, 38320 BRIE ET ANGONNES (FR); NAHRA, Maguy, 38100 GRENOBLE (FR)
(74) Mandataire: Hautier IP
(86) Numéro de dépôt international: PCT/EP2020/063512
(87) Numéro de publication internationale: WO 2020/234121

(56) Documents cités:
- US-A1- 2005 255 017
- US-A1- 2008 209 797
- US-A1- 2013 256 113
- US-A1- 2016 030 987
- US-A1- 2017 009 141
- FLANDINET L ET AL: "Metals recovering from waste printed circuit boards (WPCBs) using molten salts", JOURNAL OF HAZARDOUS MATERIALS, ELSEVIER, AMSTERDAM, NL, vol. 213, 13 février 2012 (2012-02-13), pages 485-490, XP028472693, ISSN: 0304-3894, DOI: 10.1016/J.JHAZMAT.2012.02.037 [extrait le 2012-02-21] cité dans la demande

## Description

### DOMAINE TECHNIQUE

L'invention concerne le domaine de la valorisation des déchets comprenant des composants organiques, voire des composants organiques et métalliques. Elle trouve pour application particulièrement avantageuse la valorisation des résidus de broyage automobile (RBA).

### ÉTAT DE LA TECHNIQUE

Les plastiques représentent une part croissante et importante des déchets et pourtant leur recyclage ou leur valorisation reste faible.

Des filières de tri ont été mises en place pour les déchets communs afin de faciliter leur valorisation. Ces modes de tri ne s'appliquent cependant pas à tous les déchets contenant des composants organiques, notamment les déchets issus de l'automobile et plus particulièrement les résidus broyés et/ou en mélange issus des véhicules hors d'usage.

Par exemple, les résidus de broyage automobile sont difficilement valorisables car ils sont hétérogènes et peuvent par ailleurs contenir des résidus de fluides dangereux pour l'environnement, tels que, mais ne se limitant pas à des résidus de liquide de freins, antigel, huile moteur. En outre, ces résidus de broyage automobile peuvent contenir substances explosives, par exemple provenant des dispositifs d'éjection des airbags. Environ 90 % des résidus broyés de l'automobile sont mis en décharge ou traités dans des filières d'incinération. Par ces méthodes, les composants organiques de ces résidus, voire les composants organiques et métalliques, ne sont que peu, voire pas, valorisés.

Il existe tout de même des procédés permettant la valorisation des déchets comprenant des composants organiques, voire des composants organiques et métalliques, tels que les procédés de séparation physique, les procédés « hautes températures » et les procédés hydrométallurgiques.

Les procédés de séparation physique des déchets en mélange, par exemple par flottation, permettent une séparation des composants organiques et des composants métalliques des déchets. Le taux de récupération est cependant relativement faible et demande l'emploi d'une grande quantité d'eau qui doit être traitée par la suite comme un effluent.

Les procédés « hautes températures », tels que par combustion, par exemple par incinération, émettent des quantités importantes de dioxyde de carbone, ainsi que des gaz toxiques comme la dioxine ou les acides halogénohydriques. Ces procédés nécessitent en outre des températures élevées de l'ordre de 1200°C, pour produire des fumées avec des températures comprises entre 850°C et 1100°C, et sont donc coûteux d'un point de vue énergétique.

Quant aux procédés hydrométallurgiques, ils nécessitent une quantité importante de solutions acides, basiques, ou encore de cyanure, produisant ainsi un volume important d'effluents à traiter en aval de leur mise en oeuvre. En outre, ces procédés ne s'adressent qu'à la valorisation des composants métalliques.

Les procédés précités montrent donc des limites. Notamment, aucun d'entre eux ne permet une valorisation de déchets comprenant des composants organiques, voire des composants organiques et métalliques, en limitant son impact sur l'environnement.

Parmi les solutions existantes, l'oxydation en bain de sels fondus est un procédé utilisé par exemple pour le traitement de déchets dangereux et de déchets tels les pneus usés où l'incinération directe et le traitement des effluents est difficile. Ce procédé se base sur l'utilisation d'un sel ou d'un mélange de sels comprenant des carbonates ou un mélange de ces composés avec de l'hydroxyde de sodium. Ledit sel ou mélange de sels est chauffé au-delà de sa température de fusion pour former un milieu réactionnel et induire une oxydation des composants organiques desdits déchets.

Les sels fondus ont un large domaine de stabilité électrochimique permettant les réactions d'oxydation des composants organiques. Leur grande conductivité ionique induit une grande cinétique d'échange dans le milieu réactionnel. En outre, ils ne présentent pas de dangerosité importante au niveau environnemental.

Il est notamment connu du document Flandinet et al. « Metals recovering from waste printed circuit boards (WPCBs) using molten salts », Journal of Hazardous Materials, 213-214, 2012, 485-490, un procédé de traitement des déchets issus de l'électronique utilisant un sel fondu comprenant un mélange eutectique d'hydroxyde de sodium et d'hydroxyde de potassium. Ledit mélange eutectique présente une température de fusion de 170°C permettant l'oxydation des composants organiques desdits déchets à basse température, notamment à partir de 250°C. Ainsi, le coût énergétique et par voie de conséquence l'impact du procédé sur l'environnement sont réduits.

Dans ce contexte, la présente invention propose un procédé alternatif d'oxydation en bain de sels permettant de pallier au moins un des inconvénients précités.

Plus particulièrement, le procédé selon l'invention vise à permettre une valorisation des déchets comprenant des composants organiques, voire des composants organiques et métalliques, avec un coût énergétique réduit. De façon avantageuse, le procédé selon l'invention vise également à limiter le rejet de composés nocifs lors du traitement desdits déchets.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un mode de réalisation la présente invention prévoit un procédé de valorisation de déchets comprenant des composants organiques en bain de sel(s) fondu(s) comprenant les étapes suivantes :
- Fournir, dans un réacteur, au moins un sel ou un mélange de sels dont au moins un sel, de préférence chaque sel, comprend au moins un hydroxyde de métal alcalin ou un mélange de tels hydroxydes ;
- Fournir, dans le réacteur, lesdits déchets ;
- Chauffer le réacteur à une température supérieure à la température de fusion dudit sel ou mélange de sels pour fondre ledit sel ou mélange de sels fourni, et former ainsi un milieu réactionnel liquide, puis pour induire une oxydation au moins partielle, de préférence totale, des composants organiques des déchets fournis ; et
- Récupérer au moins un composé issu de l'oxydation desdits composants organiques ;
ledit au moins un hydroxyde de métal alcalin, de préférence chaque hydroxyde de métal alcalin, comprenant de l'eau de cristallisation, jouant le rôle d'agent d'oxydation des composants organiques dans le milieu réactionnel, de sorte à induire une production de dihydrogène, ce dernier étant récupéré, en tant que composé issu de l'oxydation, pour sa valorisation.

Le procédé selon la présente invention permet une valorisation des déchets comprenant des composants organiques, notamment par la récupération de dihydrogène pouvant servir en aval du procédé comme gaz combustible ou matière première chimique. En outre, l'oxydation des composants organiques desdits déchets étant réalisée en milieu liquide, le procédé selon l'invention permet de limiter le rejet de composés nocifs et par voie de conséquence de réduire l'impact dudit procédé sur l'environnement.

De manière facultative, l'invention peut en outre présenter au moins l'une quelconque des caractéristiques suivantes.

Les déchets fournis dans le réacteur peuvent comprendre en outre des composants métalliques, le réacteur étant chauffé à une température inférieure à la température d'ébullition desdits composants métalliques. De préférence, le réacteur est chauffé à une température inférieure à la température de fusion d'au moins une partie desdits composants métalliques. Ledit procédé peut comprendre en outre une étape de récupération par filtration des composants métalliques du milieu réactionnel. Le procédé selon cette caractéristique constitue un mode de réalisation préféré de l'invention. Le sel ou mélange de sels suivant les caractéristiques précédemment énoncées n'est pas corrosif pour les métaux, c'est-à-dire qu'il ne se produit pas de réaction notable d'oxydation des composants métalliques pendant la durée du traitement des déchets. Le procédé selon cette caractéristique permet donc une valorisation ultérieure de ces métaux. En outre, la température de chauffe pouvant être inférieure à la température de fusion d'au moins une partie des composants métalliques, une fusion de l'au moins une partie desdits composants est évitée. Les composants métalliques peuvent rester à l'état solide et peuvent donc être physiquement séparables du milieu réactionnel à la température de chauffe du réacteur.

Le réacteur peut être chauffé de façon à éviter une pyrolyse des composants organiques desdits déchets. Préférentiellement, le réacteur peut être chauffé à une température inférieure à la température de pyrolyse des composants organiques. Plus préférentiellement, le réacteur peut être chauffé à une température inférieure à la température d'ébullition d'au moins une partie des composants organiques. Ainsi, la température du milieu réactionnel peut être bornée entre la température de fusion du sel et la température d'ébullition desdits composants. La réaction d'oxydation au moins partielle, de préférence totale, des composants organiques peut être par conséquent réalisée en milieu liquide. Ceci présente plusieurs avantages. Premièrement, l'oxydation des matières organiques en milieu liquide induit la production de carbonates se retrouvant piégés dans le sel fondu. Le procédé tel que décrit permet par conséquent une réduction importante des émissions de dioxyde de carbone et évite l'émission de dioxine. Deuxièmement, les composés halogénés sont également piégés dans le sel fondu. Le procédé évite donc l'émission d'acides halogénohydriques tels que l'acide chlorhydrique, l'acide fluorhydrique ou l'acide bromhydrique, les composés bromés étant souvent utilisés comme agents retardateurs de flamme, tels que les polybromodiphényléthers (PBDE), l'hexabromocyclododécane (HBCDD), le tétrabromobisphénol A (TBBPA), et les polybromobiphényles (PBB).

Parmi les éléments de mise en oeuvre du procédé, au moins le réacteur peut être à la pression atmosphérique. Le sel fondu tel que décrit présentant une faible pression de vapeur et la réaction d'oxydation étant réalisée en milieu liquide, le procédé peut en effet être réalisé à la pression atmosphérique.

Ledit au moins un hydroxyde de métal alcalin, de préférence chaque hydroxyde de métal alcalin ou le mélange de tels hydroxydes, peut former un composé à bas point de fusion. Par exemple, ledit au moins un hydroxyde de métal alcalin, de préférence chaque hydroxyde de métal alcalin ou le mélange de tels hydroxydes, peut former un composé dont la température de fusion est comprise entre 50°C et 300°C. L'utilisation d'un composé à bas point de fusion permet de limiter l'énergie nécessaire à la formation du milieu réactionnel. Par voie de conséquence, le coût énergétique du procédé est minimisé. Ledit au moins un hydroxyde de métal alcalin, de préférence chaque hydroxyde de métal alcalin ou le mélange de tels hydroxydes, peut être un composé défini ou non défini. En outre, ledit au moins un hydroxyde de métal alcalin, de préférence chaque hydroxyde de métal alcalin ou le mélange de tels hydroxydes, peut former un eutectique avec l'eau de cristallisation. L'utilisation d'un eutectique entre ledit au moins un hydroxyde de métal alcalin et l'eau permet une diminution de la température de fusion du sel ou du mélange de sels.

Selon un mode de réalisation particulier, ledit au moins un hydroxyde de métal alcalin est l'hydroxyde de potassium. Plus particulièrement, l'hydroxyde de potassium forme un eutectique avec une partie monohydratée, de formule KOH+KOH·H₂O (1:1). Ainsi, la température de fusion de l'eutectique de formule KOH+KOH·H₂O est sensiblement égale à 100°C.

L'étape de chauffe du procédé selon l'invention peut être paramétrée de sorte que la température du milieu réactionnel soit comprise entre 100°C et 450°C, préférentiellement 170°C et 350°C, encore plus préférentiellement entre 170°C et 250°C.

Selon un mode de réalisation particulier, les déchets peuvent comprendre des Résidus de Broyage de l'Automobile. De préférence, les déchets peuvent être constitués de Résidus de Broyage de l'Automobile.

Selon un mode de réalisation particulier, les déchets peuvent comprendre des Combustibles Solides de Récupération. De préférence, les déchets peuvent être constitués de Combustibles Solides de Récupération.

Parmi les éléments de mise en oeuvre du procédé, au moins le réacteur peut être maintenu sous une atmosphère comprenant un gaz de traitement inerte, tels que l'argon ou le diazote. Préférentiellement le gaz de traitement est du diazote. Ainsi une réaction du dihydrogène produit en phase gazeuse avec ladite atmosphère est limitée, voire supprimée, ce qui minimise le risque d'explosion.

Parmi les éléments de mise en oeuvre du procédé, au moins le réacteur peut être réalisé à partir d'un matériau résistant audit milieu réactionnel liquide. De préférence, le réacteur est en acier inoxydable, par exemple choisi parmi la gamme des aciers au carbone, les aciers inoxydables de type 304 et 316, ou à base d'un alliage de cobalt, tels que la stellite, ou d'un alliage de nickel, tels que les Inconels ^{®} et les Hastelloy ^{®}. En effet, l'utilisation d'un milieu réactionnel peu, voire non corrosif pour les métaux ainsi que la réduction des émissions d'acides halogénohydriques permettent avantageusement d'utiliser de l'acier inoxydable pour former certains au moins des éléments de mise en oeuvre du procédé. Notamment, le réacteur peut être réalisé en acier inoxydable sans qu'il n'y ait de corrosion notable des parois du réacteur sur la durée du traitement des déchets.

Selon un mode de réalisation particulier, le procédé est exempt d'une étape d'ajout, dans le réacteur, d'un autre agent oxydant que de l'eau. L'eau de cristallisation jouant le rôle d'agent d'oxydation des composants organiques, il n'est dès lors pas nécessaire d'ajouter au réacteur un autre agent oxydant, tel que du dioxygène. L'apport de dioxygène étant évité, le risque d'explosion lié à la présence de dioxygène, en plus du dihydrogène produit, est minimisé. En outre, la présence d'eau de cristallisation permet de limiter l'apport d'eau dans le procédé, réduisant ainsi la consommation d'eau, ainsi que le volume d'effluents à traiter en aval du procédé. De préférence, le procédé est exempt d'une étape d'ajout dans le réacteur, d'un autre agent oxydant que l'eau de cristallisation initialement comprise dans l'hydroxyde de métal alcalin.

L'étape de récupération dudit au moins un composé issu de l'oxydation desdits composants organiques peut comprendre en outre la récupération d'une fraction gazeuse comprenant le dihydrogène produit. Ladite fraction gazeuse peut comprendre une pluralité de gaz non nocifs tels que du méthane, de l'azote ainsi que des composés organiques volatils en plus du dihydrogène produit. Ces gaz peuvent en outre être séparés par des techniques connues de l'homme du métier, éventuellement pour leur valorisation.

Le procédé peut en outre comprendre une étape d'ajout d'au moins un catalyseur choisi parmi les catalyseurs d'hydrogénation. L'ajout d'un catalyseur d'hydrogénation au milieu réactionnel permet d'accroître la cinétique de réaction d'oxydoréduction par catalyse hétérogène ainsi que la quantité de dihydrogène produite. Ledit au moins un catalyseur peut comprendre des particules métalliques, par exemple à base de nickel ou de fer, ou un mélange de telles particules.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants.
La figure 1 représente les étapes du procédé de valorisation de déchets comprenant des composants organiques en bain de sel(s) fondu(s) selon un mode de réalisation de l'invention.
La figure 2 représente les étapes du procédé de valorisation de déchets comprenant des composants organiques en bain de sel(s) fondu(s) selon un autre mode de réalisation de l'invention.

Les dessins sont donnés à titre d'exemples et ne sont pas limitatifs de l'invention. Ils constituent des représentations schématiques de principe destinées à faciliter la compréhension de l'invention.

### DESCRIPTION DÉTAILLÉE

Avant d'entamer une revue détaillée de modes de réalisation de l'invention, sont énoncés ci-après des aspects généraux du procédé ainsi que des caractéristiques optionnelles, possiblement utilisées en association ou alternativement.

Le procédé de valorisation de déchets selon la présente invention concerne tous types de déchets comprenant des composants organiques. Plus particulièrement, le procédé concerne la valorisation de déchets hétérogènes, c'est-à-dire comprenant des composants organiques, potentiellement de natures diverses, voire en outre mêlés à des composants métalliques. Par exemple, lesdits déchets peuvent être des déchets d'équipements électriques et électroniques ; des résidus broyés de l'automobile, notamment issus du broyage des véhicules hors d'usage (RBA) ; ou encore des combustibles solides de récupération issus des ordures ménagères (CSR).

Ledit procédé peut en outre concerner la valorisation de déchets triés de façon homogène de sorte à comprendre des composants organiques de nature semblable. Par exemple, de tels déchets sont issus de matériaux tels que le polyéthylène téréphtalate ou le polyéthylène glycol ou encore issus de textiles polyesters. Selon un autre exemple, ces déchets peuvent en outre être ou comprendre des huiles, par exemple des huiles usagées issues de véhicules.

Ledit procédé a en outre été testé avec des molécules organiques utilisées telles que synthétisées ou achetées, telles que l'oxalate de sodium, l'éthylène glycol ou de la cellulose. Les sels fondus étant des milieux ioniques, les molécules qui présentent des liaisons polaires sont généralement solubles et aisément oxydables aux températures décrites dans la suite.

Dans le cas où les déchets sont de nature solide, lesdits déchets sont généralement mis en forme par une action mécanique, par exemple par déchiquetage, broyage ou concassage, en amont du procédé, notamment lors de leur récupération au niveau des filières de tri. Dans le cas où ladite mise en forme n'est pas réalisée en amont du procédé, le procédé de valorisation selon la présente invention peut comprendre une étape permettant la mise en forme desdits déchets avant de les fournir 2 au réacteur. Les déchets ainsi broyés présentent une surface accessible plus importante pour l'oxydation de leurs composants organiques dans le bain de sels fondus. Le cas échéant, ledit procédé peut comprendre cette étape de mise en forme en addition d'une mise en forme réalisée en amont du procédé, afin d'augmenter la surface accessible desdits déchets. Par exemple, la mise en forme mécanique des déchets conduit à des morceaux de taille inférieure à 5 mm.

Selon les caractéristiques précédemment citées, les déchets que concerne ledit procédé sont sous forme solide, voire liquide. Les déchets sous forme gazeuse ne sont cependant pas à exclure, lesdits déchets pouvant être fournis 2 au milieu réactionnel par bullage.

Afin de permettre l'oxydation des composants organiques desdits déchets, le procédé selon la présente invention comprend l'utilisation d'un sel ou mélange de sels dont au moins un sel, de préférence chaque sel, comprend au moins un hydroxyde de métal alcalin ou un mélange de tels hydroxydes. Ledit au moins un hydroxyde de métal alcalin, de préférence chaque hydroxyde de métal alcalin, comprend de l'eau de cristallisation, jouant le rôle d'agent d'oxydation des composants organiques dans le milieu réactionnel. L'eau de cristallisation peut en outre permettre d'abaisser le point de fusion du sel ou mélange de sels.

Il est précisé que de manière générale et dans le cadre de la présente invention, le terme « eau de cristallisation » désigne les molécules d'eau se trouvant dans la structure cristalline du sel.

De manière générale et dans le cadre de la présente invention, on entend par « agent d'oxydation », un composé recevant au moins un électron d'une autre espèce chimique lors d'une réaction d'oxydoréduction.

Étant comprise dans la structure cristalline du sel, l'eau de cristallisation est stabilisée par des interactions électrostatiques. Ainsi, son évaporation est limitée lors de l'étape de chauffe du réacteur et plus particulièrement lors de la fonte dudit sel ou mélange de sels fourni pour la formation du milieu réactionnel liquide. L'eau de cristallisation permet ainsi une oxydation en phase liquide des composants organiques, notamment en évitant l'apport additionnel d'un agent d'oxydation.

En outre, l'eau de cristallisation induit une production de dihydrogène, un avantage qui apparaîtra plus clairement à la lecture des exemples présentés ultérieurement. Plus particulièrement, le dihydrogène produit est au moins en partie, voire majoritairement, voire totalement, issu de la réduction de l'eau de cristallisation par le déchet.

Au moins un sel, de préférence chaque sel, comprend au moins un hydroxyde de métal alcalin ou un mélange de tels hydroxydes. En effet, il peut être avantageux d'utiliser différents hydroxydes de métaux alcalins selon le type de déchets à valoriser, de façon par exemple à adapter le coût du procédé. En outre, il est ainsi possible de varier les propriétés d'interaction desdits hydroxydes avec les composants organiques, voire les composants organiques et métalliques, ainsi qu'avec le ou les composés issus de l'oxydation desdits composants organiques.

Au moins un hydroxyde de métal alcalin, de préférence chaque hydroxyde de métal alcalin, comprend de l'eau de cristallisation. Par exemple, l'hydroxyde est de l'hydroxyde de sodium sous la forme d'un eutectique ou d'une phase définie, ou préférentiellement de l'hydroxyde de potassium.

Au moins un hydroxyde de métal alcalin forme préférentiellement un eutectique avec l'eau de cristallisation. Ainsi, l'utilisation d'un eutectique induit une température de fusion du sel inférieure à celle d'un hydroxyde de métal alcalin pur, ce qui permet de limiter la température de chauffe du réacteur. Par voie de conséquence, un impact énergétique plus faible du procédé est obtenu.

À titre d'exemples, les principales phases définies des hydroxydes alcalins avec l'eau de cristallisation sont données dans le tableau ci-dessous, résumant les principaux composés définis avec les hydroxydes de métaux alcalins (P. Pascal, Nouveau traité de chimie minérale, Masson et Cie, Tome Il (1et 2), Paris, 1963 ; F.-Z. Roki, M.-N. Ohnet, S. Fillet, C. Chatillon, I. Nuta, J. Chem. Thermodynamics, 80, 2015, 147-160).

**Tableau 1**

| T_{f} congruente(°C) | y=1 | | | | | | | y=3 |
|---|---|---|---|---|---|---|---|---|
| | x=1 | x=2 | x=3 | x=3.5 | x=4 | x=5 | x=7 | x=1 |
| yLiOH-xH2O | | | | | | | | |
| yNaOH-xH2O | 65.1 | T_{f} non congr. | | 15.9 | T_{f} non congr. | T_{f} non congr. | T_{f} non congr. | |
| yKOH-xH2O | 145 | 33 | | | ∼ -34 | | | |
| yRbOH-xH2O | 145 | T_{f} non congr. | T_{f} non congr. | | T_{f} non congr. | | | T_{f} non congr. |
| yCsOH-xH2O | 226 | mél. phases | -5.5 | | | | | |

À titre d'exemples, le tableau suivant donne les principaux eutectiques d'hydroxydes de métaux alcalins avec l'eau de cristallisation, et leur température de fusion. Les phases ne sont toutefois pas toujours identifiées, comme l'indique le symbole (?).

**Tableau 2**

| MOH-H₂O | T_{f}(°C) |
|---|---|
| CsOH-H₂O | 150 |
| 2CsOH.H₂O (?) | |
| KOH+KOH.H₂O | 100 |
| NaOH+NaO.H₂O | 6 2 |
| RbOH-H₂O | 104 |
| 2RbOH.H₂O (?) | |

Un mélange d'hydroxydes de métaux alcalins compris dans ledit au moins un sel peut en outre former un eutectique. Les diagrammes de phases binaires pour les hydroxydes de métaux alcalins anhydres ont été établis, mais il n'existe pas de diagrammes ternaires d'hydroxydes de métaux alcalins avec l'eau, notamment à cause du nombre de phases possibles en fonction de la fraction molaire d'eau et du partage des molécules d'eau suivant le métal alcalin du mélange. Il existe cependant des composés en milieux aqueux avec des phases définies comme, par exemple, NaOH-LiOH-H2O (A. Lach, L. Andre, A. Lassin, M. Azaroual, J.-P. Serin, P. Cézac, J. Solution Chem., 44, 2015, 1424-1451). Le tableau suivant donne la température de fusion des eutectiques pour les systèmes binaires d'hydroxydes anhydres pouvant être utilisés comme sels fondus avec l'eau.

**Tableau 3**

| composés binaires | T_{f}(°C) |
|---|---|
| CsOH-KOH | ∼192 |
| CsOH-LiOH | ∼276 |
| CsOH-NaOH | ∼152 |
| CsOH-RbOH | - |
| KOH-Li OH | 225 |
| KOH-NaOH | 170 |
| KOH-RBOH | - |
| LiOH-NaOH | ∼215 |
| LiOH-RbOH | 23 8 |
| NaOH-RbOH | ∼155 |

Les mesures de fugacité de l'eau dans les milieux fondus réalisées entre 140°C et 200°C avec des hydroxydes alcalins MOH (M=K, Na, Rb ou Cs) ont montré que l'hydroxyde de potassium est l'hydroxyde qui retient le mieux l'eau alors que l'hydroxyde de sodium la libère le plus facilement (W. M. Vogel, K. J. Routsis, V. J. Kehrer, D. A. Landsman, J. G. Tschinkel, Journal of Chemical and Engineering Data, 12(4), 1967, 465-472). Par ailleurs, il est connu que l'hydroxyde de lithium monohydraté, fondu à 500°C pendant une journée, arrive à retenir encore 0.05 mole de H2O par mole de LiOH (P. Pascal, Nouveau traité de chimie minérale, Masson et Cie, Tome II (fascicule 1), Paris, 1963).

En considérant une base économique, ainsi que sa capacité à retenir l'eau de cristallisation, l'hydroxyde de sodium est choisi préférentiellement pour former au moins en partie le bain de sel(s) fondu(s) dans le procédé selon l'invention.

Plus préférentiellement, le sel comprend donc de l'hydroxyde de potassium de formule KOH+KOH.H₂O, possédant un point de fusion à 100°C. (P. Pascal, Nouveau traité de chimie minérale, Masson et Cie, Tome Il (fascicule 2), Paris, 1963). On peut également prévoir l'utilisation d'un mélange d'hydroxyde de sodium et d'hydroxyde de potassium. Par exemple, le mélange d'hydroxyde de sodium et d'hydroxyde de potassium est de formule NaOH-(KOH+KOH.H2O).

Des expériences avec les mélanges NaOH-(KOH+KOH.H2O) pour différents rapports molaires entre l'hydroxyde de sodium et l'hydroxyde de potassium ont été menées. Des phases non parfaitement définies du mélange NaOH-(KOH+KOH.H2O) ont en outre été utilisées. Dans tous les cas, l'eau de cristallisation de l'hydroxyde de potassium a engendré l'oxydation des matières organiques.

Par ailleurs, on peut également prévoir l'utilisation des composés comprenant au moins un hydroxyde de métal alcalin M, de formule MOH-H2O-X où X peut être par exemple un alcool (méthanol, éthanol) ou de l'ammoniac, pour lesquels l'alcool ou l'eau constituent le solvant. X peut aussi être un sel de métal alcalin ou d'un métal de transition.

La réaction globale d'oxydation des composants organiques se déroule selon un mécanisme d'oxydation en sel(s) fondu(s) (ou *Molten Sait Oxydation*). Cette réaction comprend une mise en solution des composants organiques par solvolyse. La solvolyse, de façon générale et dans le cadre de la présente invention, correspond à une réaction entre les composants organiques et une espèce chimique comprise dans le milieu réactionnel de façon à dissoudre tout ou partie desdits composants. La solvolyse est suivie d'une oxydation, en phase homogène liquide, des produits issus de la solvolyse des composants organiques par l'eau de cristallisation. Les réactions de solvolyse et d'oxydation peuvent toutefois se réaliser simultanément. En outre, la dissolution totale ou partielle des composants organiques peut résulter directement de l'oxydation desdits composants.

L'oxydation des composants organiques des déchets induit notamment la production de carbonates en évitant l'émission de dioxines. Ces carbonates restent dissous dans le milieu réactionnel, réduisant, voire évitant l'émission d'oxydes de carbone, et notamment de monoxyde ou de dioxyde de carbone. En effet, aucune émission de dioxyde de carbone supérieure à 20 ppm n'a été mesurée dans la fraction gazeuse issue du milieu réactionnel, 20 ppm étant la limite de détection du dispositif servant à réaliser la mesure. En outre, l'éventuelle part halogénée issue des déchets est transformée en ions halogénures. Les ions halogénures sont piégés dans le milieu réactionnel par interactions électrostatiques, limitant ainsi l'émission d'acides halogénohydriques tels que l'acide chlorhydrique, bromhydrique ou fluorhydrique. Selon le temps de séjour dans le bain, et en considérant les températures d'ébullition basses de ces acides halogénohydriques, un lavage des gaz chauds peut toutefois être mis en oeuvre à la sortie du réacteur pour éviter toute émission de traces d'acides halogénohydriques.

L'oxydation des composants organiques des déchets induit également la production de dihydrogène. Le rôle de l'eau de cristallisation comme agent oxydant pour la production d'hydrogène a été mise en évidence par la mise en oeuvre du procédé selon l'invention avec l'oxalate de sodium comme déchet à valoriser. L'oxalate de sodium est une molécule organique ne possédant pas d'atome d'hydrogène. Lors de l'oxydation de cette molécule selon le procédé, une production d'hydrogène est observée dans le réacteur. La quantité de dihydrogène produite correspond au nombre de moles nécessaire à l'oxydation de l'oxalate de sodium. Le dihydrogène provient donc d'une espèce jouant de rôle d'agent d'oxydation de l'oxalate de sodium et comportant des atomes d'hydrogène, ce qui désigne l'eau de cristallisation.

De même, la mise en oeuvre du procédé selon l'invention avec des bouteilles en polyéthylène téréphtalate comme déchet à valoriser induit une production de dihydrogène, dont la quantité est supérieure au nombre de moles d'hydrogène contenu dans les monomères du polyéthylène téréphtalate. Dans ce cas, le dihydrogène produit provient conjointement de l'oxydation de la matière organique et de la réduction de l'eau de cristallisation. Cette conclusion a aussi été validée en utilisant de la cellulose en poudre.

Selon un mode de réalisation particulier, des catalyseurs d'hydrogénation, sont ajoutés au milieu réactionnel liquide. L'ajout de ces catalyseurs délocalise l'oxydation des composants organiques sur la surface des catalyseurs plutôt qu'en phase homogène liquide. La réaction d'oxydation est alors produite par catalyse hétérogène, nécessitant de fait un contact moindre entre les molécules d'eau et les composants organiques. La cinétique de réaction de réduction de l'eau de cristallisation, et par voie la quantité de dihydrogène produite, sont ainsi augmentées. Les catalyseurs d'hydrogénation comprennent des particules métalliques, préférentiellement à base de nickel ou de fer, voire un mélange de telles particules.

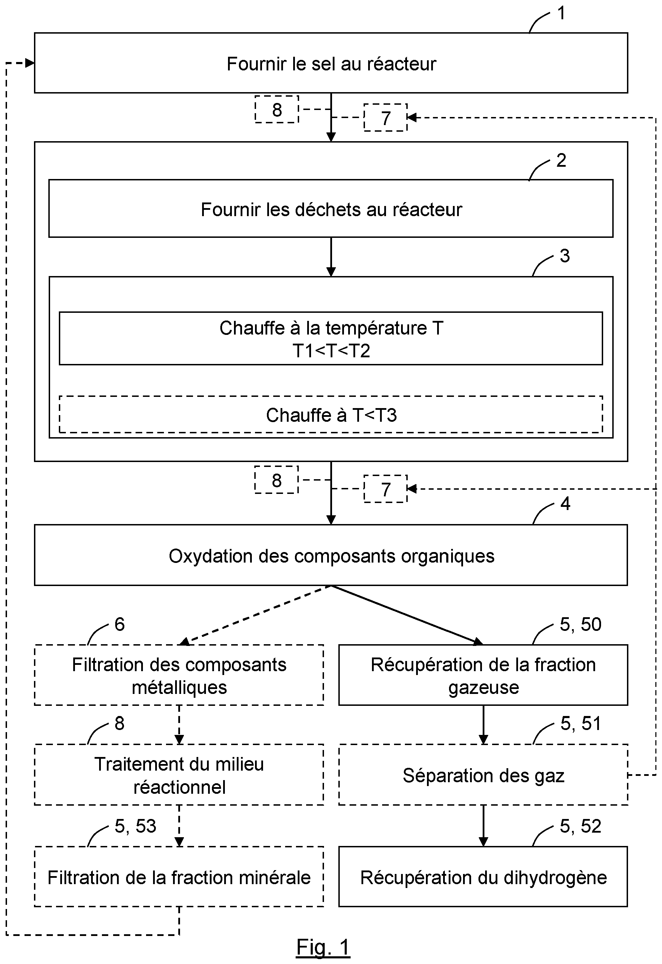

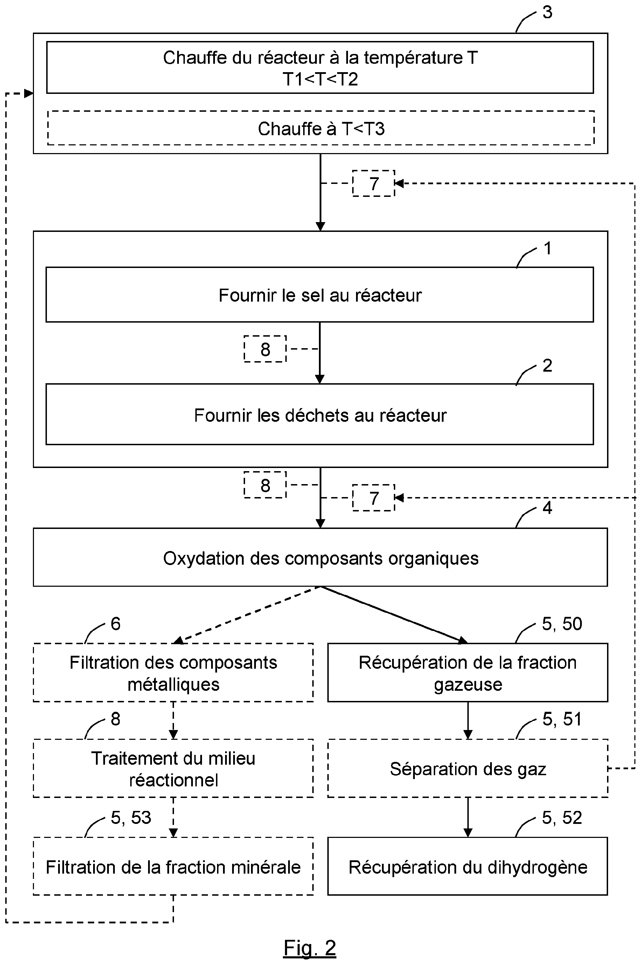

À titre d'exemple, le procédé est illustré par les figures 1 et 2, où des variantes du procédé sont indiquées par des chemins en parallèle et des étapes optionnelles sont indiquées en pointillées. Comme illustré en figure 1, le procédé comprend une étape au cours de laquelle au moins un sel ou un mélange de sels, selon les caractéristiques précédemment décrites, sont fournis 1 dans un réacteur ; une étape au cours de laquelle les déchets sont fournis 2 au réacteur ; et une étape de chauffe 3 du réacteur à une température T supérieure à la température de fusion T1 du sel ou mélange de sels. De préférence, la température T est comprise entre la température T1 et la température T2, la température T2 étant choisie parmi la température de pyrolyse des composants organiques des déchets, et, préférentiellement, la température d'ébullition d'au moins une partie de ces composants. Dans le cas où les déchets comprennent des composants métalliques, la température T est en outre inférieure à la température d'ébullition, et, préférentiellement à la température de fusion des composants métalliques. Selon un mode de réalisation particulier, la température du milieu réactionnel est comprise entre 100°C et 450°C, préférentiellement entre 170°C et 350°C. Il est en effet avantageux de travailler à une température supérieure à 100°C, afin d'une part d'apporter de l'énergie thermique à la réaction d'oxydation. D'autre part, une faible viscosité du sel fondu peut être obtenue, afin de favoriser un meilleur mouillage de la surface des déchets par la solution de sel(s) fondu(s) ainsi qu'un brassage efficace du milieu réactionnel. Selon un mode de réalisation particulier, la température du milieu réactionnel est comprise entre 170°C et 250°C, notamment lorsque les composants organiques peuvent être oxydés à basse température par l'eau de cristallisation.

Par les trois étapes précédemment décrites, un milieu réactionnel liquide est obtenu, comprenant le sel ou mélange de sels fondus ainsi que les déchets, de façon à induire la réaction globale d'oxydation 4 des composants organiques des déchets. L'ordre relatif de ces trois étapes peut être modifié selon les modes de réalisation du procédé. Notamment, comme illustré en figure 1, le sel ou mélange de sels et les déchets peuvent être introduits 1, 2 dans le réacteur, de façon successive ou en mélange. Le réacteur peut ensuite être chauffé 3 à la température T. De façon alternative, un mélange comprenant le sel ou mélange de sels et les déchets peut être introduit 1, en une fois ou de préférence progressivement, dans le réacteur préalablement chauffé 3 à la température T. Cette alternative est illustrée sur la figure 2. Ainsi, une fusion progressive des sels peut permettre la solvolyse et la réaction d'oxydation des déchets en évitant leur pyrolyse. L'ajout progressif de ce mélange permet en outre d'éviter une baisse de la température du milieu réactionnel. Les sels peuvent en outre être fondus et les déchets chauffés avant leurs introductions respectives dans le réacteur. Ainsi, le procédé selon ce mode de réalisation particulier permet d'éviter un temps de latence causé par la montée en température à l'intérieur du réacteur lors de sa chauffe 3. Ce mode de réalisation permet également une mise en oeuvre du procédé en continu, selon laquelle le sel ou mélange de sels et les déchets, sont introduits en continu dans le réacteur, tout en permettant aussi une vidange continue du réacteur.

Comme illustré dans les figures 1 et 2, des catalyseurs peuvent en outre être ajoutés 8 au réacteur, lors de ou suite à l'introduction 1 du sel ou du mélange de sels. De préférence, les catalyseurs sont mélangés au sel. On peut également prévoir que l'ajout 8 de catalyseurs soit réalisé ultérieurement, par exemple, les catalyseurs peuvent être introduits une fois le milieu réactionnel liquide formé.

La réaction globale d'oxydation 4 des composants organiques a lieu, de la façon décrite précédemment. Au cours de cette oxydation 4, le réacteur est maintenu à la température T, voire la température T est modulée, tout en restant comprise dans l'intervalle compris entre T1 et T2, voire entre T1 et T3, T3 étant la température d'ébullition d'au moins une partie des composants métalliques pouvant être mêlés aux composants organiques. De préférence, T3 est la température de fusion de la majorité des composants métalliques pouvant être mêlés aux composants organiques. Notamment, il est possible d'augmenter la température T de façon à fournir de l'énergie thermique pour accélérer la réaction d'oxydation des composants organiques. En outre, un mélange du milieu réactionnel est avantageusement réalisé de façon à faciliter la réaction.

Le réacteur pour la mise en oeuvre du procédé selon l'invention peut être un réacteur avec un mode de chauffage par conduction (chauffage par résistors par exemple), par convection (par exemple par un flux de gaz chaud circulant dans le réacteur) ou par rayonnements luminescents ou électromagnétiques (induction, microondes). Selon le volume ou la masse de déchets organiques à traiter en phases solides, liquides ou gazeuses, la nature du four comprenant les matériaux nécessaires à sa construction sera différente ; le procédé de chauffage pourra alors être adapté en fonction des techniques connues de l'homme du métier. Le mode de chauffage induit par ailleurs un choix pour le mode d'agitation de la masse en fusion dans le réacteur. Par exemple, afin d'assurer le mélange du milieu réactionnel, le réacteur chauffé par résistors comprend au moins un élément propre à mélanger ledit milieu, tel qu'une paroi tournante, un rotor ou une hélice.

Le milieu réactionnel selon l'invention n'étant par nature pas corrosif pour les métaux dans la gamme de température de chauffe 3, et les émissions d'acides halogénohydriques étant évitées, le réacteur peut être en métal, préférentiellement en acier inoxydable, sans qu'il n'y ait de corrosion notable des parois du réacteur lors de la mise en oeuvre du procédé. On peut également prévoir que le réacteur soit à base d'un alliage de cobalt, tels que la stellite, ou d'un alliage de nickel, tels que les Inconels ^{®} et les Hastelloy ^{®}. Notons que d'autres matériaux n'appartenant pas à la catégorie des métaux peuvent aussi être utilisés, tels que le carbone ou le nitrure de bore. En effet, en absence de dioxygène et dioxyde de carbone, le carbone graphite ou vitreux par exemple ne serait pas oxydé par l'eau jusqu'à des températures de chauffe de 450°C.

Lors de la réaction d'oxydation 4 des composants organiques, deux voire trois fractions sont obtenues : une fraction liquide comprenant le milieu réactionnel et des produits d'oxydation 4 tels que les carbonates ; une fraction gazeuse comprenant une pluralité de gaz issus de l'oxydation 4 des composants organiques, et plus particulièrement du dihydrogène ; une fraction solide, par exemple dans le cas où les déchets comprennent des composants métalliques.

Comme illustré dans les figures 1 et 2, le procédé selon l'invention comprend une étape de récupération 5 d'au moins un composé issu de l'oxydation 4 des composants organiques. Le procédé comprend plus particulièrement la récupération 50 de la fraction gazeuse se dégageant du milieu réactionnel. Le ou les gaz issus de l'oxydation peuvent être emportés par un gaz porteur. Préférentiellement, le réacteur est alimenté 7 par un flux continu d'un gaz porteur pour emmener le ou les gaz issus de l'oxydation 4. Le réacteur est ainsi alimenté par un gaz porteur entre l'une quelconque des étapes du procédé en amont de l'oxydation 4 des composants organiques. Plus préférentiellement, le gaz porteur est un gaz neutre, tel que de l'argon ou du diazote, afin d'éviter tout risque d'explosion avec le dihydrogène produit. De préférence, le gaz porteur est du diazote afin de limiter le coût du procédé.

En outre, les mesures faites par analyses thermogravimétriques thermodifférentielles (désignées par l'abréviation ATG-ATD en anglais) montrent que l'eau de cristallisation contenue dans l'hydroxyde de potassium peut être au moins en partie libérée au-dessus de 300°C. Pour pallier la sortie de l'eau de cristallisation nécessaire à la réaction d'oxydation, le gaz porteur peut être hydraté, notamment pour les hautes températures de chauffe 3 du réacteur, par exemple pour la gamme de température comprise entre 350 et 450°C. Ainsi, un équilibre d'eau sous la forme vapeur est maintenu entre le milieu réactionnel liquide et la phase gaz au-dessus du liquide. Alors qu'il ne semble pas que cette hydratation du gaz porteur ait une importance jusqu'à 350°C (zone de température correspondant à des molécules facilement oxydables), il apparaît un accroissement de la production de gaz issus de l'oxydation aux températures supérieures à 350 °C.

La fraction gazeuse récupérée 50 est composée d'une pluralité de gaz tels que le dihydrogène, le méthane et le diazote, ainsi que des composés organiques volatiles. Ces différents composants sont séparables 51 par des techniques connues de l'homme du métier. Par exemple, les composés organiques volatiles sont condensés en abaissant la température de la fraction gazeuse en dessous de 80 °C. Le but est de séparer les gaz en vue de leur valorisation. Notamment, le dihydrogène est récupéré 52 pour être valorisé comme gaz combustible ou comme matière première chimique. Le méthane peut être récupéré pour être valorisé comme gaz combustible. En outre, le diazote est récupérable pour être réutilisé comme gaz porteur destiné à alimenter 7 le réacteur.

La fraction solide comprenant les composants métalliques des déchets peut être récupérée par filtration 6. La filtration est effectuée à partir du milieu réactionnel à l'aide d'au moins une grille, préférentiellement une grille en acier inoxydable présentant une dimension pour la filtration inférieure à la taille des composants métalliques, par exemple sensiblement égale à 0,8 mm. Cette étape de filtration 6 peut être effectuée lorsque le milieu réactionnel est à la température de chauffe 3 du réacteur, et notamment dans le cas où au moins une partie des composants métalliques possède une température de fusion supérieure à la température de chauffe 3 du réacteur. Par ailleurs, cette étape de filtration 6 peut être réalisée à une température comprise entre la température de fusion du sel ou du mélange de sel(s), et la température de fusion de l'ensemble des composants métalliques pouvant être compris dans les déchets. Par exemple, cette température peut correspondre à la température de chauffe 3 du réacteur ou être atteinte suite à un refroidissement du milieu réactionnel. Le milieu réactionnel peut en outre être refroidi à une température inférieure à la température de fusion du sel ou du mélange de sel(s). Le milieu réactionnel, dès lors en phase solide, peut être dissous dans un volume d'eau avant de procéder à la filtration 6 à l'aide d'au moins une grille. Selon cet exemple, la grille peut être de dimensions inférieures à celles utilisées lorsque le sel ou mélange de sel(s) est fondu.

La fraction liquide comprenant le milieu réactionnel et des produits d'oxydation 4 tels que les carbonates peut être traitée 8 de façon à régénérer le sel ou mélange de sels pour sa réutilisation dans le procédé. Par exemple, le milieu réactionnel dissous dans un volume d'eau, est traité 8 à la chaux vive ou éteinte de formule Ca(OH)₂, préférentiellement à température ambiante. L'ajout de chaux induit une précipitation à froid de carbonate de calcium et produit des échantillons de CaCO₃ comme le calcite, voire un mélange de calcite et d'aragonite, utilisables dans les bétons.

Le traitement 8 peut en outre apporter des ions hydroxyles assurant la régénération des hydroxydes de métal alcalin. Le sel ou mélange de sel peut ainsi réutilisable dans le procédé.

La mise en oeuvre du procédé concernant la gestion ou la récupération des fractions gazeuse, liquide et solide fait appel à des opérations unitaires telles que des mélangeurs, des filtrations dont les éléments de mise en oeuvre existent sur le marché.

Le procédé peut être réalisé de façon discontinue en utilisant un réacteur conventionnel de type « batch », c'est à dire comportant une cellule. Le sel ou mélange de sels ainsi que les déchets sont introduits dans la cellule. Les déchets ainsi introduits sont valorisés selon les étapes du procédé. De nouveaux déchets, voire un nouveau lot de sel ou mélange de sels, sont introduits dans la cellule pour leur valorisation. Le procédé est donc discontinu et traite séquentiellement différents lots de déchets. De façon alternative, le procédé peut par ailleurs être réalisé de façon continue en utilisant un réacteur comportant au moins une entrée et une sortie configurées de sorte que l'apport des déchets, voire la récupération d'au moins un composé issu de l'oxydation des composants organiques, par exemple du dihydrogène, s'effectue en continu. Pour cela, un réacteur comprenant une vis sans fin est envisagé, tout en prenant en compte l'explosivité des gaz produits.

L'invention n'est pas limitée aux modes de réalisations précédemment décrits et s'étend à tous les modes de réalisation couverts par les revendications.

Notamment, on peut prévoir que le procédé soit réalisé sur une gamme de pression allant de la pression atmosphérique à des pressions plus importantes. Le sel ou mélange de sels fondu présentant une faible pression de vapeur et la réaction d'oxydation étant réalisée en milieu liquide, le procédé peut en effet être effectué à la pression atmosphérique. La pression maximum est choisie pour des aspects sécuritaires et dépend donc du réacteur et des éléments de mise en oeuvre du procédé. De préférence, le procédé pourrait être réalisé à une pression inférieure à 8 bar.

## Revendications

1. Procédé de valorisation de déchets comprenant des composants organiques en bain de sel(s) fondu(s) comprenant les étapes suivantes :
- Fournir (1), dans un réacteur, au moins un sel ou un mélange de sels dont au moins un sel comprend au moins un hydroxyde de métal alcalin ou un mélange de tels hydroxydes ;
- Fournir (2), dans le réacteur, lesdits déchets ;
- Chauffer (3) le réacteur à une température supérieure à la température de fusion dudit sel ou mélange de sels pour :
• fondre ledit sel ou mélange de sels fourni (1), et former ainsi un milieu réactionnel liquide ; puis pour
• Induire une oxydation (4) au moins partielle des composants organiques des déchets fournis (2) ; et
- Récupérer (5) au moins un composé issu de l'oxydation desdits composants organiques ;
ledit au moins un hydroxyde de métal alcalin comprenant de l'eau de cristallisation, jouant le rôle d'agent d'oxydation des composants organiques dans le milieu réactionnel, de sorte à induire une production de dihydrogène, ce dernier étant récupéré (52), en tant que composé issu de l'oxydation, pour sa valorisation.

2. Procédé selon la revendication précédente, dans lequel lesdits déchets fournis (2) dans le réacteur comprennent en outre des composants métalliques, le réacteur étant chauffé (3) à une température inférieure à la température d'ébullition desdits composants métalliques, ledit procédé comprenant en outre une étape de récupération (6) par filtration des composants métalliques du milieu réactionnel.

3. Procédé selon l'une quelconque des revendications précédentes, dans lequel le réacteur est chauffé (3) de façon à éviter une pyrolyse des composants organiques desdits déchets.

4. Procédé selon l'une quelconque des revendications précédentes, dans lequel ledit au moins un hydroxyde de métal alcalin ou le mélange de tels hydroxydes, forme un composé à bas point de fusion, ledit composé pouvant être un eutectique.

5. Procédé selon l'une quelconque des revendications précédentes, dans lequel ledit au moins un hydroxyde de métal alcalin est l'hydroxyde de potassium.

6. Procédé selon la revendication précédente, dans lequel l'hydroxyde de potassium forme avec l'eau de cristallisation, un eutectique de formule KOH+KOH·H2O.

7. Procédé selon l'une quelconque des revendications précédentes dans lequel l'étape de chauffe (3) est paramétrée de sorte que la température du milieu réactionnel soit comprise entre 100°C et 450°C.

8. Procédé selon l'une quelconque des revendications précédentes, dans lequel les déchets comprennent des Résidus de Broyage de l'Automobile.

9. Procédé selon l'une quelconque des revendications précédentes, dans lequel les déchets comprennent des Combustibles Solides de Récupération.

10. Procédé selon l'une quelconque des revendications précédentes, dans lequel le réacteur est maintenu (7) sous une atmosphère comprenant un gaz de traitement inerte.

11. Procédé selon l'une quelconque des revendications précédentes, dans lequel le réacteur est réalisé à partir d'un matériau résistant audit milieu réactionnel liquide.

12. Procédé selon l'une quelconque des revendications précédentes, ledit procédé étant exempt d'une étape d'ajout dans le réacteur, d'un autre agent oxydant que de l'eau.

13. Procédé selon l'une quelconque des revendications précédentes dans lequel l'étape de récupération (5) dudit au moins un composé issu de l'oxydation desdits composants organiques comprend la récupération (50) d'une fraction gazeuse comprenant le dihydrogène produit.

14. Procédé selon l'une quelconque des revendications précédentes, comprenant en outre une étape d'ajout (8) au milieu réactionnel d'au moins un catalyseur choisi parmi les catalyseurs d'hydrogénation.

15. Procédé selon la revendication précédente dans lequel ledit au moins un catalyseur comprend des particules métalliques à base de nickel ou de fer ou un mélange de telles particules

## Patentansprüche

1. Verfahren zur Verwertung von Abfällen, die organische Bestandteile enthalten, in Salzschmelze(n), umfassend die folgenden Schritte:
- Bereitstellen (1) mindestens eines Salzes oder einer Mischung von Salzen in einem Reaktor, von denen mindestens ein Salz mindestens ein Alkalimetallhydroxid oder eine Mischung solcher Hydroxide umfasst;
- Bereitstellen (2) der Abfälle in dem Reaktor;
- Erhitzen (3) des Reaktors auf eine Temperatur oberhalb der Schmelztemperatur des Salzes oder der Mischung von Salzen, um:
• das bereitgestellte Salz oder Salzgemisch zu schmelzen (1) und dadurch ein flüssiges Reaktionsmedium zu bilden; dann um
• eine zumindest teilweise Oxidation (4) der organischen Komponenten der bereitgestellten (2) Abfälle zu induzieren; und
- Gewinnen (5) mindestens einer Verbindung, die aus der Oxidation der organischen Bestandteile stammt;
wobei das mindestens eine Alkalimetallhydroxid, das Kristallwasser umfasst, als Oxidationsmittel für die organischen Bestandteile in dem Reaktionsmedium fungiert, um eine Produktion von Dihydrogen zu induzieren, wobei letzteres als eine aus der Oxidation hervorgegangene Verbindung zur Verwertung gewonnen (52) wurde.

2. Verfahren nach dem vorhergehenden Anspruch, wobei die in dem Reaktor bereitgestellten (2) Abfälle zusätzlich Metallkomponenten umfassen, wobei der Reaktor auf eine Temperatur unterhalb der Siedetemperatur der Metallkomponenten erhitzt (3) wird, wobei das Verfahren weiter einen Schritt der Gewinnung (6) der Metallkomponenten aus dem Reaktionsmedium durch Filtration umfasst.

3. Verfahren nach einem der vorhergehenden Ansprüche, wobei der Reaktor so erhitzt (3) wird, dass eine Pyrolyse der organischen Komponenten der Abfälle vermieden wird.

4. Verfahren nach einem der vorhergehenden Ansprüche, wobei das mindestens eine Alkalimetallhydroxid oder die Mischung solcher Hydroxide eine Verbindung mit niedrigem Schmelzpunkt bildet, wobei die Verbindung ein Eutektikum sein kann.

5. Verfahren nach einem der vorhergehenden Ansprüche, wobei es sich bei dem mindestens einen Alkalimetallhydroxid um Kaliumhydroxid handelt.

6. Verfahren nach dem vorhergehenden Anspruch, wobei das Kaliumhydroxid mit dem Kristallwasser ein Eutektikum der Formel KOH+KOH·H2O bildet.

7. Verfahren nach einem der vorhergehenden Ansprüche, bei dem der Erhitzungsschritt (3) so parametrisiert wird, dass die Temperatur des Reaktionsmediums zwischen 100 °C und 450 °C liegt.

8. Verfahren nach einem der vorhergehenden Ansprüche, wobei die Abfälle Schredderrückstände aus der Automobilindustrie umfassen.

9. Verfahren nach einem der vorhergehenden Ansprüche, wobei die Abfälle feste Brennstoffe aus der Wiederverwertung umfassen.

10. Verfahren nach einem der vorhergehenden Ansprüche, wobei der Reaktor unter einer Atmosphäre gehalten (7) wird, die ein inertes Prozessgas umfasst.

11. Verfahren nach einem der vorhergehenden Ansprüche, wobei der Reaktor aus einem Material hergestellt ist, das gegen das flüssige Reaktionsmedium beständig ist.

12. Verfahren nach einem der vorhergehenden Ansprüche, wobei das Verfahren frei von einem Schritt der Zugabe eines anderen Oxidationsmittels als Wasser in den Reaktor ist.

13. Verfahren nach einem der vorhergehenden Ansprüche, wobei der Schritt der Gewinnung (5) der mindestens einen Verbindung, die aus der Oxidation der organischen Komponenten stammt, die Gewinnung (50) einer Gasfraktion umfasst, die das erzeugte Dihydrogen umfasst.

14. Verfahren nach einem der vorhergehenden Ansprüche, das außerdem einen Schritt der Zugabe (8) von mindestens einem Katalysator zum Reaktionsmedium umfasst, der ausgewählt ist aus den Hydrierungskatalysatoren.

15. Verfahren nach dem vorhergehenden Anspruch, bei dem der mindestens eine Katalysator Metallteilchen auf Nickel- oder Eisenbasis oder eine Mischung solcher Teilchen umfasst

## Claims

1. Method for upgrading waste comprising organic components in a bath of molten salt(s) comprising the following steps:
- Providing (1) to a reactor, at least one salt or a mixture of salts of which at least one salt comprises at least one alkali metal hydroxide or a mixture of such hydroxides;
- Providing (2) said waste to the reactor;
- Heating (3) the reactor at a temperature above the melting point of said salt or mixture of salts to:
• melt said salt or mixture of salts provided (1), and thus form a liquid reaction medium; then to
• Induce an at least partial oxidation (4) of the organic components of the waste supplied (2); and
- Recovering (5) at least one compound resulting from the oxidation of said organic compounds;
said at least one alkali metal hydroxide comprising water of crystallisation, acting as oxidising agent for the organic compounds in the reaction medium, so as to induce a production of dihydrogen, the latter being recovered (52), as a compound resulting from the oxidation, for the upgrading thereof.

2. Method according to the preceding claim, wherein said waste provided (2) to the reactor further comprises metal components, the reactor being heated (3) at a temperature less than the boiling temperature of said metal components, said method further comprising a step of recovering (6) by filtration metal components of the reaction medium.

3. Method according to any one of the preceding claims, wherein the reactor is heated (3) in such a way as to prevent a pyrolysis of the organic components of said waste.

4. Method according to any one of the preceding claims, wherein said at least one alkali metal hydroxide or the mixture of such hydroxides, forms a compound with a low melting point, said compound able to be a eutectic.

5. Method according to any one of the preceding claims, wherein said at least one alkali metal hydroxide is potassium hydroxide.

6. Method according to the preceding claim, wherein the potassium hydroxide forms with the water of crystallisation, a eutectic having formula KOH+KOH·H2O.

7. Method according to any one of the preceding claims wherein the step of heating (3) is configured in such a way that the temperature of the reaction medium is comprised between 100°C and 450°C.

8. Method according to any one of the preceding claims, wherein the waste comprises Automobile Shredder Residues.

9. Method according to any one of the preceding claims, wherein the waste comprises Solid Recovered Fuel.

10. Method according to any one of the preceding claims, wherein the reactor is maintained (7) in an atmosphere comprising an inert treatment gas.

11. Method according to any one of the preceding claims, wherein the reactor is made from a material that resists said liquid reaction medium.

12. Method according to any one of the preceding claims, said method being exempt from a step of adding in the reactor, an oxidising agent other than water.

13. Method according to any one of the preceding claims wherein the step of recovering (5) said at least one compound resulting from the oxidation of said organic compounds comprises the recovery (50) of a gaseous fraction comprising the dihydrogen produced.

14. Method according to any one of the preceding claims, further comprising a step of adding (8) to the reaction medium at least one catalyst chosen from hydrogenation catalysts.

15. Method according to the preceding claim wherein said at least one catalyst comprises metal particles with a nickel or iron base or a mixture of such particles.
